# EUROPEAN PATENT APPLICATION

(11) **EP 4 254 017 A1**
(43) Date of publication of application: **04.10.2023**
(21) Application number: 22164778.7
(22) Date of filing: 28.03.2022
(51) Int. Cl.: G01T 1/17

(54) **PHOTON COUNTING DETECTOR AND PHOTON COUNTING METHOD**

(71) Applicant: Koninklijke Philips N.V., 5656 AG Eindhoven (NL)
(72) Inventor: FRACH, Thomas, Eindhoven (NL); SOLF, Torsten Jörn, Eindhoven (NL)
(74) Representative: Philips Intellectual Property & Standards

(57) **Abstract**

The present invention relates to a photon counting detector comprising a scintillator (10, 20) configured to convert incident gamma radiation into optical photons; a pixelated photodetector (11, 22) configured to detect the flux of optical photons wherein the pixelated photodetector (22) is a silicon photomultiplier, SiPM, detector, wherein each photodetector pixel comprises an array of silicon avalanche photo diodes, SPADs; and circuitry (80, 90) configured to heat SPADs by applying, if dark count rate of a SPAD exceeded a dark count rate threshold, an elevated reverse bias voltage to the SPAD to force the SPAD into breakdown with current flowing through the SPAD for the time of a heating period, and controlling the length of the heating period.

## Description

### FIELD OF THE INVENTION

The present invention relates to a photon counting detector, a corresponding photon counting method and an imaging apparatus comprising a photon counting detector for detection of radiation, in particular gamma radiation and x-ray radiation.

### BACKGROUND OF THE INVENTION

Photon counting has conventionally been implemented using photomultiplier tube (PMT) detectors, which comprise a light-sensitive photocathode and a set of "multiplier" anode terminals. The photocathode emits at least one electron responsive to impingement of a photon, and the electron(s) in turn strike successive anode terminals with each such event causing emission of a cascade of electrons, thus producing a multiplication effect that results in a measurable electrical pulse. A PMT is capable of high-speed photon counting. PMT detectors have disadvantages including being relatively bulky discrete devices with large optical windows that operate at high voltage and are susceptible to failure due to the evacuated tube design and the high operational electrical voltage. A radiation detector of this kind is e.g. disclosed in US 8,723,132 B2.

Silicon photomultiplier (SiPM) devices have been developed to overcome some of these disadvantages, and to provide photon-counting detectors that are readily integrated with silicon-based signal/data processing circuitry. In some embodiments, a SiPM device employs an avalanche photodiode as the light sensor. When biased above its breakdown voltage, the avalanche diode goes into breakdown responsive to impingement of a single photon. Such a device is sometimes called a single photon avalanche diode (SPAD) detector. In a typical SPAD detector, the avalanche photodiode is reverse biased above its breakdown voltage and is in series with a quenching resistor. Impingement of a single photon causes the p-n junction to break down in a multiplicative (i.e., "avalanche") cascade of charge carriers that flow in the SPAD detector as a measurable electrical current. This current is quenched relatively quickly as voltage over the resistor due to the current flow lowers the reverse bias across the avalanche diode to a level below its break down voltage. Additionally or alternatively, an active quenching subcircuit comprising (for example) one or more diodes, resistors, and/or transistors can provide more rapid quenching. Some illustrative examples of SiPM detector arrays are disclosed US 9,268,033 B2 and US 10,078,141 B2.

Digital silicon photomultipliers are used as photon counting detectors (sometimes also called photon detectors) in high-performance PET/CT systems. Coupled to a time-of-flight capable scintillator, the fast trigger logic of the digital silicon photomultiplier enables time resolution in the range of 100ps - 200ps. Time resolution of these systems is limited, among others, by the time spread of the scintillation process. New detector concepts using prompt photons have been proposed, potentially offering improvement of time resolution significantly below 100ps.

Strong radiation fields irradiating an image sensor (e.g. a CMOS image sensor) can cause damage to the device, leading to higher leakage, dark noise and change in the spectral sensitivity. In case of SPADs exposed to flux of radiation photons, the effect is a temporary (undesired) increase of the dark count rate.

### SUMMARY OF THE INVENTION

It is an object of the present invention to mitigate potential negative effects of x-ray or gamma irradiation in SPAD-based photon counting detectors used e.g. in photon counting spectral CT applications.

In a first aspect of the present invention a photon counting detector is presented comprising:
a scintillator configured to convert incident gamma radiation into optical photons;
a pixelated photodetector configured to detect the flux of optical photons wherein the pixelated photodetector is a silicon photomultiplier, SiPM, detector, wherein each photodetector pixel comprises an array of silicon avalanche photo diodes, SPADs; and
circuitry configured to heat SPADs by
   - applying, if dark count rate of a SPAD exceeded a dark count rate threshold, an elevated reverse bias voltage to the SPAD to force the SPAD into breakdown with current flowing through the SPAD for the time of a heating period, and
   - controlling the length of the heating period.

In a further aspect of the present invention a corresponding photon counting method is presented.

In a still further aspect of the present invention an imaging apparatus comprising a photon counting detector as disclosed herein is presented.

Preferred embodiments of the invention are defined in the dependent claims.

The present invention is based on the idea to locally increase the temperature of the SPAD and its surroundings in order to speed up the damage repair due to x-ray or gamma irradiation. Rather than using additional structural elements or hardware, like additional heating elements or heating wires embedded into the detector, the SPAD itself is configured and used as heating element. A SPAD biased constantly above its breakdown voltage will eventually break down and start conducting current. This breakdown is typically stopped by a quenching resistor (in passively quenched SPADs) or through activation of an active quench and recharge circuit (in actively quenched SPADs). According to the present invention the current flow is continued for a certain time (also called "heating period" herein) to heat the SPAD and thus enable damage repair and reduction of the dark count rate (DCR). This solution does not require any modification of existing hardware, particularly for actively quenched SPADs.

According to an embodiment the circuitry is configured to control the length of the heating period based on the amount of dark count rate and/or the extent by which the dark count rate exceeded the dark count rate threshold. In particular, the length of the heating period is controlled to be longer the larger the amount of dark count rate is and/or the higher the extent is by which the dark count rate exceeded the dark count rate threshold. One or more predetermined lengths may be defined in advance (and e.g. stored in a look-up table or stored in a memory accessible by the circuitry), for which a length is selected, e.g. based on the amount of dark count rate and/or the extent by which the dark count rate exceeded the dark count rate threshold.

The detector may further comprise circuitry configured to measure the dark count rate of the SPAD. The measurement may be carried out in advance to determine if and by which amount a reduction of the dark count rate is needed or desired. The dark count rate may also be measured after a damage repair to check the success of the damage repair.

In another embodiment the circuitry is configured to ramp up the reverse bias voltage until a bias current caused by application of the reverse bias voltage to flow reaches a The circuitry may further be configured to ramp down the reverse bias voltage below breakdown voltage after the heating period and to recharge the SPAD to become sensitive for optical photon detection. This brings the SPAD back to normal operation mode.

In an embodiment the SPAD is insensitive for optical photon detection during the heating period. This avoids that any additional heat during the damage repair may cause a further increase of the dark noise of the SPAD. It is intended to disable high-DCR SPADs in normal operation to reduce the overall noise, and in case of the damage repair, it is re-used to select only SPADs that show a certain level of damage (and to limit the requirements on the SPAD current supply).

The circuitry may be configured to monitor the temperature of the SPAD during the heating period by measuring the reverse bias voltage level, in particular while keeping the bias current level constant. In this way, overheating can be avoided and the intensity and speed of damage repair can be controlled. Hereby, the circuitry may be configured to control the reverse bias voltage level during the heating level not to fall below a level required to maintain constant current through the SPAD.

Typically, it is desired to heat the SPAD up to certain temperature and keep it there for certain time. However, when the SPAD temperature changes, the ionization rates in the SPAD junction change as well and that determines the current. The current should be above a certain level, e.g. above 20 µA, in order to start a self-sustained avalanche. The way to compensate for the temperature-dependence of the ionization rates is to modulate the bias voltage so that the current stays constant in order to deposit a certain amount of heat energy into the SPAD. The temperature dependence of the ionization coefficients manifests itself in temperature dependency of the breakdown voltages, which increases by approximately 20 mV/K (process-dependent). As this is generally known for the detector, the SPAD temperature can be estimated by looking at the drift of the bias voltage during heating.

The claimed imaging apparatus that comprises a photon counting detector as disclosed herein may e.g. be a PET apparatus, a CT apparatus, a SPECT apparatus, a Time-of-Flight (TOF) PET apparatus, or a Compton camera.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of shows a schematic diagram of a conventional photon counting detector.
Fig. 2 shows a cross-sectional view of the layout of an exemplary digital photon counting detector.
Fig. 3 shows a general circuit diagram of one of the detector cells of a pixelated digital radiation detector.
Fig. 4 shows a diagram of the dark count behavior of an x-ray illuminated SPAD array.
Fig. 5 shows a circuit diagram of an embodiment of a detector cell of a photon counting detector according to the present invention.
Fig. 6 shows a flowchart of an embodiment of a method according to the present invention.
Fig. 7 shows a circuit diagram of another embodiment of a detector cell of a photon counting detector according to the present invention.
Fig. 8 shows a flowchart of another embodiment of a method according to the present invention.
Fig. 9 shows time diagrams of a normal SPAD operation.
Fig. 10 shows time diagrams of a damage repair cycle.

### DETAILED DESCRIPTION OF EMBODIMENTS

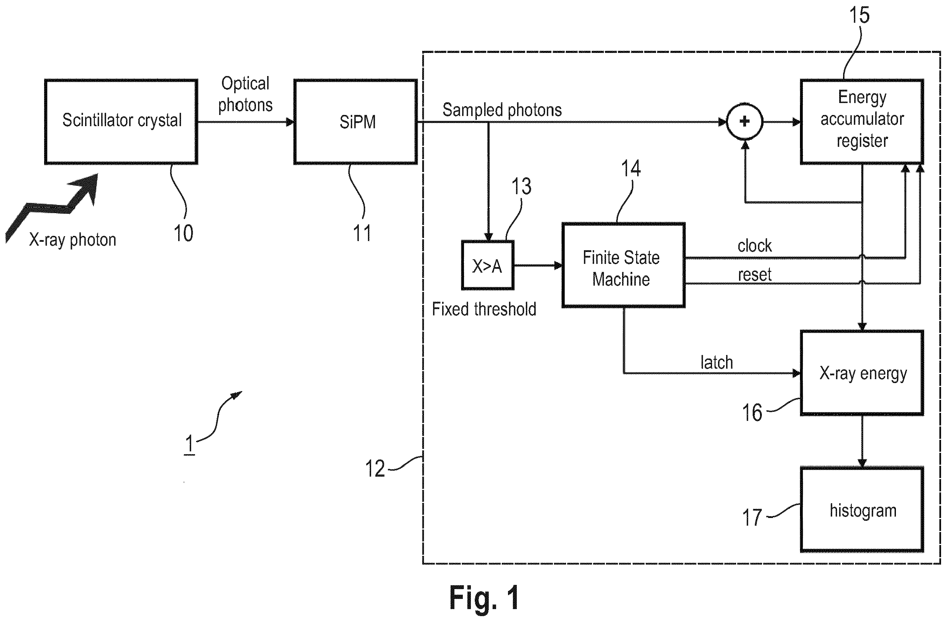

Fig. 1 shows a schematic diagram of a conventional photon counting detector 1, in particular a scintillator-based spectroscopic photon counting detector with a fixed threshold. The detector 1 comprises a scintillator 10 that converts incident gamma radiation (e.g. x-ray radiation) into optical photons and a pixelated photodetector 11 (e.g. a digital SiPM) that detects and samples the flux of optical photons, providing a number of detected photons every e.g. 5 ns. The detected optical photons are further processed and evaluated by circuitry 12 (or corresponding units).

In a comparison unit 13 the number X of detected photons (or a sum of several samples) is compared to a fixed threshold A. If the value X exceeds A, an event is detected and a finite state machine 14 starts an acquisition by accumulating a predefined number of samples in an energy accumulator 15. At the end of the acquisition, the accumulator value is stored in an x-ray energy register 16 and the accumulator 15 is reset in preparation for the next event. The value stored in the energy register 16 is then sorted in an energy histogram 17, where the corresponding bin is increased.

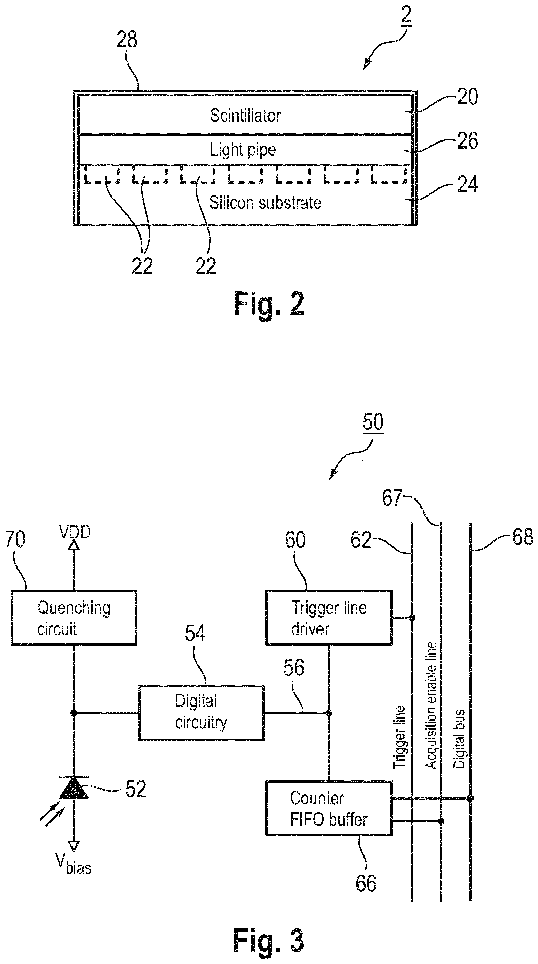

Fig. 2 shows a cross-sectional view of the layout of an exemplary digital photon counting detector 2. The scintillator 20 produces a scintillation or burst of light when the gamma or x-ray strikes the scintillator 20. The burst of light is received by an array of detector pixels 22 monolithically disposed on a silicon substrate 24. As will be described, the detector pixels 22 are digital detector pixels that output values including a digital representation of a count of photons and a digital representation of a timestamp indicative of when the burst of light corresponding to the scintillation event was detected by the detector pixel 22. Moreover, the plurality of radiation detector 2 outputs indexing information including, for example, a detector index indicating which of the plurality of radiation detectors outputs the radiation detection event, and a detector pixel index indicating which detector pixel or pixels of that radiation detector detected the burst of light corresponding to the radiation detection event.

The scintillator 20 may be selected to provide high stopping power for gamma rays or x-rays with rapid temporal decay of the scintillation burst. Some suitable scintillator materials are LSO, LYSO, MLS, LGSO, LaBr, LuAP /LuAG, GAGG and mixtures thereof. It should be appreciated that other scintillator materials can also be used. Although Fig. 2 shows the scintillator 20 as a single crystal, an array of crystals can instead be used. Additionally, an optional planar light pipe 26 can be interposed between the scintillator 20 and the detector pixels 22 to improve transmission of photons of the scintillation light burst to the detector pixels 22. The scintillator 20 and optional light pipe 26 are optionally encased in a reflective coating 28, which directs scintillation light toward the pixels 22.

Fig. 3 shows a general circuit diagram of one of the detector cells of a pixelated digital radiation detector as e.g. shown in Fig. 2. Each pixel 22 of the radiation detector 2 includes an array of detector cells. Fig. 3 shows a general circuit diagram of one such detector cell 50. A photodiode 52 is biased in a breakdown region and serves as an input to digitizing circuitry 54. An output 56 of the digitizing circuitry 54 has a first digital value corresponding to a quiescent state, and transitions to a second digital value responsive to detection of a photon by the photodiode 52. When the first photon of a scintillation burst is detected, the switching of the output 56 from the first digital value to the second digital value activates an open collector trigger line driver 60 which causes a trigger signal to be applied to a common trigger line or bus 62. The trigger signal in turn initiates a photon counter/FIFO buffer 66 that counts the level transitions of the digitizing circuitry 54 from the first digital value to the second digital value over an integration time period started by the trigger signal. In some other embodiments, an acquisition enable line 67 initiates the photon counter 66. A quenching circuit 70, which may be either active or passive, limits current through the photodiode 52 and is configured to facilitate transition the biasing circuitry from the second digital value back to the first digital value. Thus, the detector cell 50 may count more than one photon if the detector cell 50 is quenched back to the quiescent first digital value before the integration time period expires. The final count stored in the photon counter/FIFO buffer 66 is accessible via a digital bus 68.

Single-photon avalanche diodes are devices capable of detecting single photons. One of the non-ideal properties of these sensitive devices is the presence of dark counts - detections unrelated to a photon - appearing as a random noise of the detector. This random noise adds to the detected signal and reduces its quality, and by this means the quality of the final result. One reason for the dark count noise is the presence of defects and impurities in the sensitive volume of the SPAD, leading to thermal generation of carriers by the Shockley-Reed-Hall process. This component of the dark count noise is related to the manufacturing of the device (purity of the materials and annealing steps in the semiconductor line).

Another component of the dark count noise can originate from the SPAD guard ring. SPAD guard ring is the volume surrounding the high field region of the SPAD. Its purpose is to provide a smooth transition of the high-field to low-field area without the presence of field spikes, which would lead to premature breakdown (edge or corner breakdown) of the device. In a working SPAD, the guard ring is designed to not affect the performance of the SPAD, meaning its width is sufficient to suppress the edge breakdown but not too wide as to adversely affect the fill factor of the SPAD, as the region of the guard ring is not sensitive to photons. Often, the guard ring is realized as "virtual guard ring"

The sensitive area of the SPAD exhibits the highest field strength of the electric field magnitude while the field taper off in the guard ring region towards a shallow and deep trench isolation. These isolation trenches typically consist of silicon dioxide, and deep trenches can additionally be filled with polycrystalline silicon.

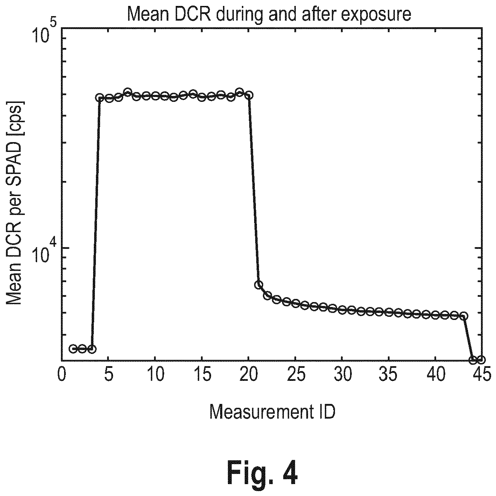

Normally, these isolation trench materials are neutral, as are the backend of line (BEOL) oxide layers on top of the SPAD. Irradiation with high-energetic photons (x-rays, gamma photons) can create trapped charge buildup inside these isolation layers. This charge can modify the field distribution inside the guard ring and can lead to a substantial increase of the dark count rate of the SPAD due to premature breakdown of the guard ring. This is illustrated in Fig. 4 showing a diagram of the dark count behavior of an x-ray illuminated SPAD array, i.e., where a SPAD array was illuminated by an x-ray source while the count rate of the SPADs was measured in a series of measurements before, during, and after illumination.

From Fig. 4, it is apparent that the dark count behavior of the array does not immediately recover when the x-ray source is switched off. The recovery of the dark count rate can take from minutes to few hours (last two measurement points acquired several hours after the irradiation). The speed of recovery depends on the ambient temperature of the sensor and hence the isolating oxide layers. Generally speaking, recovery proceeds faster at elevated temperatures.

One of the main elements of the present invention is a means to locally increase the temperature of the SPAD and its surroundings in order to speed up the damage repair due to the irradiation with x-ray or gamma radiation. Instead of providing one or more additional hardware elements, such as a heating wire or another heating element, according to the present invention the SPAD itself is configured as a heating element, thereby eliminating the need for additional hardware. As explained above, a SPAD biased constantly above its breakdown voltage, e.g. through a low-ohmic path, will eventually break down and start conducting current. In contrast, the SPAD is normally biased above breakdown either through a resistor (limiting current to e.g. less than 20 µA so it is several 100 kOhm) or charged up by a short pulse to a recharge switch that is then open so that the SPAD is not connected.

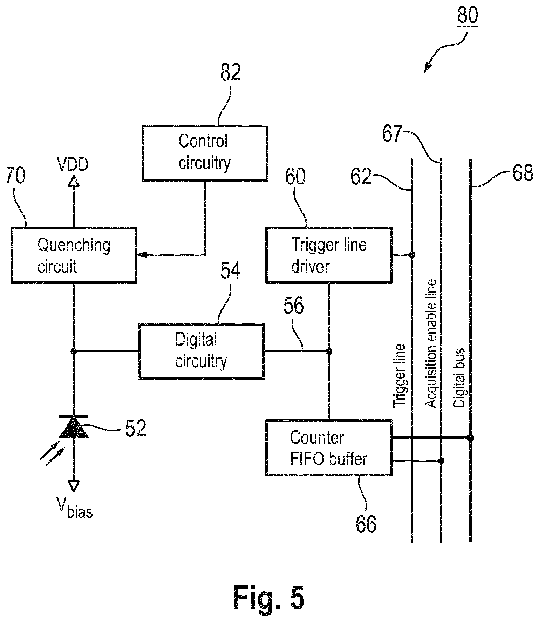

Fig. 5 shows a circuit diagram of an embodiment of a detector cell 80 of a pixelated digital radiation detector according to the present invention. The general layout of the radiation detector may be similar or identical as shown in Figs. 1 and 2.

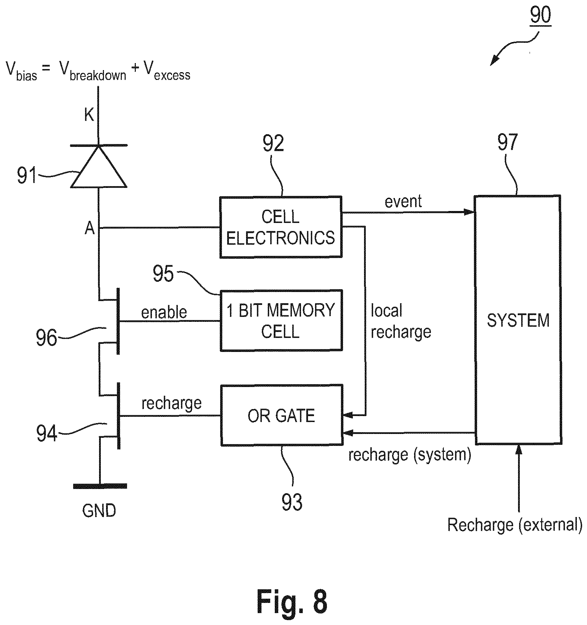

In addition to the detector cell 50 shown in Fig. 3, additional circuitry 82 is provided, e.g. in the form of dedicated hardware or a programmed processor. The circuitry 82 (called control circuitry in Fig. 5) is configured to apply, if dark count rate of a SPAD exceeded a dark count rate threshold, an elevated reverse bias voltage to the SPAD to force the SPAD into breakdown with current flowing through the SPAD for the time of a heating period, and to control the length of the heating period. In this way, each SPAD (or groups of SPADs, e.g. all SPADs of a pixel) can individually be heated for a certain time to achieve a damage repair. As will be explained below with reference to Fig. 8, an OR gate may provide a control signal from an external control line to a recharge switch. It is assumed that the repair cycle will use this control line, to which all cells in a pixel are connected, and which can be controlled by an external controller or processor, e.g. an FPGA, that runs the damage detection and repair algorithm. This FPGA would normally be located on the tile or module that controls the sensors, i.e. one or more levels up in the system architecture.

The circuitry 82 may be provided by a measurement signal from the system, e.g. from the counter/FIFO buffer 66, that indicates the dark count rate of the SPAD. The counter/FiFO buffer 66 may thus be configured to measure the dark count rate of the SPAD. The measurement may thus be done on SPAD level, but in another implementation this function would be located to a next level, e.g. an FPGA or other processing circuitry, and the detector would only provide means to externally control the state of the recharge FET, as shown in Fig. 8. This implementation can be realized with less effort. Further, the damage repair can be done sequentially and between patient scans when the detector is not needed.

The measurement may be carried out in advance to determine if and by which amount a reduction of the dark count rate is needed or desired. The dark count rate may also be measured after a damage repair to check the success of the damage repair.

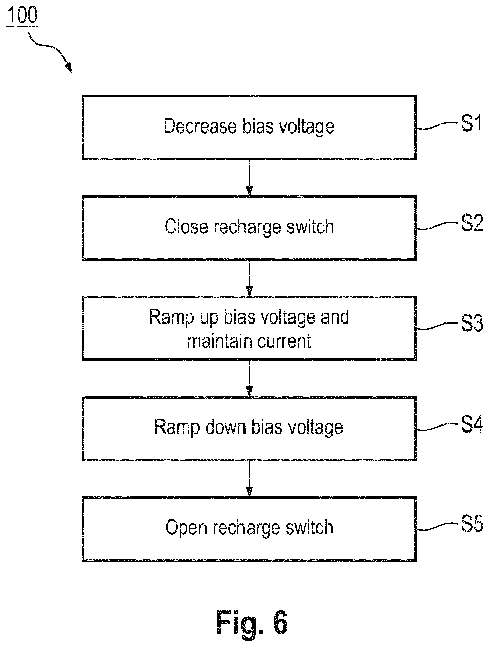

A flow chart of an embodiment of a method 100 according to the present invention for use in a detector having actively quenched SPADs, assuming full control over the quench and recharge switch configuration, is shown in Fig. 6. In step S1 the bias voltage is decreased to just below the breakdown voltage. In step S2 a recharge switch is closed, pulling the anode of the SPAD to ground. In step S3 the bias voltage is slowly ramped up and bias current is measured. The bias voltage ramp slows down or stops when a certain current limit is reached. This current is maintained for a certain period of time (the heating period), which may be predetermined or set based e.g. on the level of the measured dark count rate of the SPAD. In step S4 the bias voltage is ramped down below breakdown. In step S5 the recharge switch is opened, and the sensor is reconfigured for normal operation.

Generally, each SPAD can be individually controlled for damage repair at an individual timing. However, since the SPAD is inoperative during the damage repair, it is preferred that all SPADs or the SPADs that require damage repair are controlled for damage repair at the same time. The damage repair may occur occasionally (e.g. on demand or at regular intervals) and when the imaging apparatus (e.g. a CT scanner) is not in use.

Dark count rate measurement is preferably carried out prior and, optionally, after the repair in order to justify the need and prove the success of the measure. The current in the order of a few mA to a few 100 mA can be adjusted in step S3, thereby locally increasing the SPAD temperature. As the SPAD is in close proximity to the damaged area, the heating will help restore the operation of the guard ring.

When carrying out this operation, the current shall be closely monitored and the SPAD interconnect may be designed in such a way as to minimize potential ageing issues due to electromigration. The SPAD current should be as low as necessary and the time as short as possible.

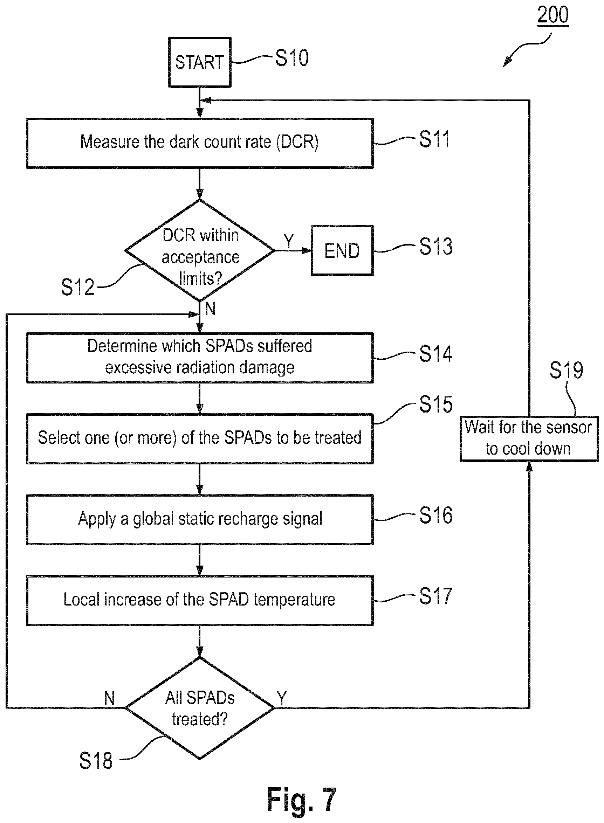

A flow chart of another embodiment of a method 200 according to the present invention is shown in Fig. 7. After starting the method (step S10) the dark count rate (DCR) of each SPAD is measured separately (step S11) using an inhibit memory and internal or external dark count counters (not shown). It is then checked (step S12) if the DCR is within acceptance limits. If yes, the method ends (step S13), otherwise it is determined (step S14) from the DCR, which SPADs suffered excessive radiation damage (i.e. have excessive amount of dark counts) and need to be treated. The position of these SPADs is stored and high DCR SPAD due to manufacturing process is eliminated (i.e. the baseline DCR acquired before radiation exposure is subtracted). Subsequently, one (or more) of the SPAD(s) to be treated is (are) selected (step S15) using the inhibit memory. All other SPADs are disabled during this treatment.

For the treatment of a SPAD, the method as shown in Fig. 5 may be applied. In another embodiment, as shown in Fig. 7, a global static recharge signal is applied (step S16). This will connect the selected SPAD(s) to ground (GND) for this time biasing the SPAD V_{excess} above the breakdown voltage V_{breakdown}. A dark count will start a static avalanche breakdown, which will not be quenched. The current through the SPAD at this time should exceed ~30 µA (condition for a self-sustaining avalanche) but should be limited to few 10 mA to prevent life-time effects due to electromigration. This continuous avalanche current will lead to heat build-up inside the SPAD, leading to an increase in breakdown voltage. Ideally, the current is monitored by the bias power supply and limited at a constant level during the heating process. Duration of the anneal cycle can be constant or variable depending on the amount of damage (DCR level) and may be measured from the onset of the avalanche current.

Power dissipated inside the SPAD junction will lead to a local increase of the SPAD temperature (step S17). As the temperature coefficient of the SPAD is generally well known (in the range of 20 mV/K), change of the bias voltage V_{bias} (assuming the bias power supply is configured to provide a constant bias current) can be used to determine the junction temperature (here neglecting change of the resistance by heating-up of the interconnect). Higher temperature accelerates the reduction of radiation damage in the SPAD.

Finally, it is checked (step S18) if all SPADs have been treated. If yes, it is waited (step S19) until the sensor sufficiently cools down before the method proceeds with step 11 (or waits for a new iteration of damage repair is started). If not all SPADs have been treated yet, the method proceeds with step S 14 to treat one or more further SPADs.

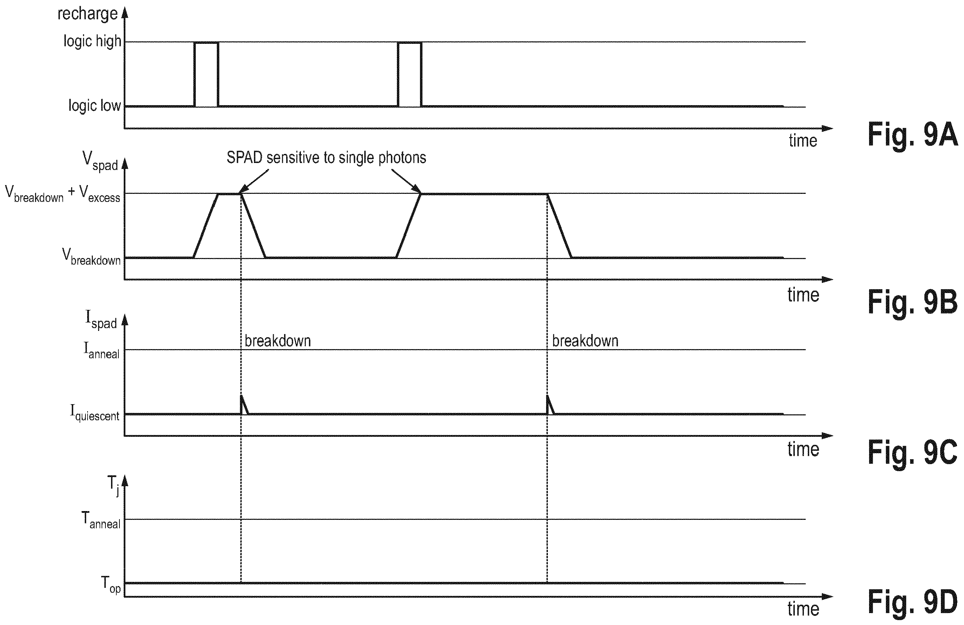

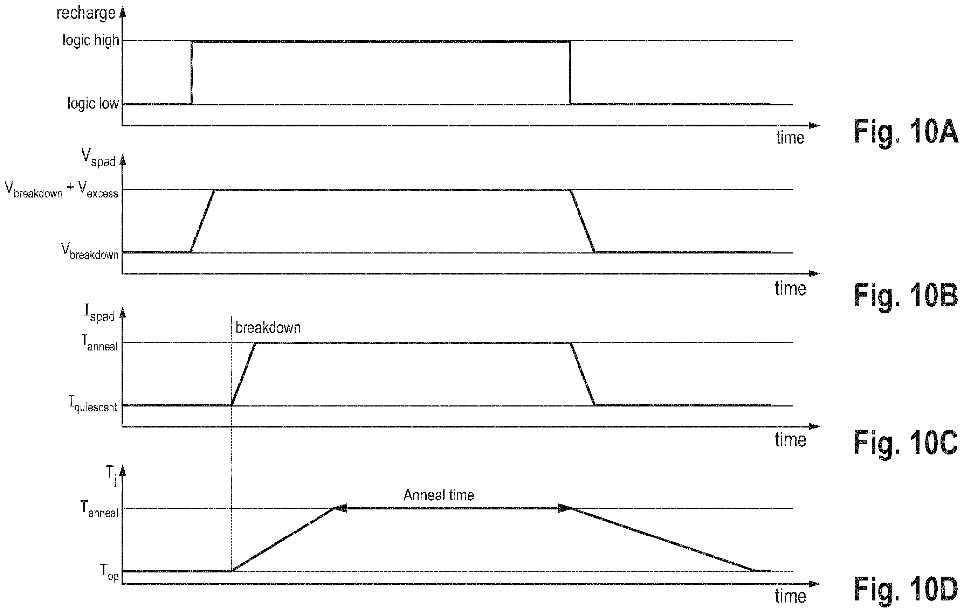

Fig. 8 shows another embodiment of a circuit diagram of a detector cell 90 of a pixelated digital radiation detector according to the present invention. Fig. 9 shows time diagrams of a normal SPAD operation and Fig. 10 shows time diagrams of a damage repair (anneal) cycle. Herein, Figs. 9A and 10A show a logic recharge signal, Figs. 9B and 10B show the SPAD voltage V_{spad} across the SPAD 91, Figs. 9C and 10C show the SPAD current I_{spad} through the SPAD 91, and Figs. 9D and 10D show the timing of the different modes of operation.

During normal operation (indicated in Fig. 9D as signal that is constantly in the same (normal) operation mode for all the time Tₒₚ), as explained above, a local recharge signal is applied by cell electronics 92 to an OR gate 93 to close a first switch 94 (recharge switch) so that the anode A of the SPAD 91 is connected to ground GND. Further, an enable signal from a memory 95 closes a second switch 96 (enable switch). The enable switch 96 disconnects the SPAD from the recharge switch 94, i.e., when the memory 95 is set to 0 the SPAD will not be recharged/repaired and when the memory 95 is set to 1 it will close the enable switch 96 and connect the SPAD to the recharge.

The SPAD voltage V_{spad} (the bias voltage) ramps up from the breakdown voltage V_{breakdown} to a higher voltage V_{breakdown} + V_{excess}. The SPAD is now sensitive to single photos. A photon arriving at the SPAD (an event) leads a short increase of the current I_{spad} through the SPAD above the quiescent current I_{quiescent} and a breakdown so that the SPAD voltage V_{spad} breaks down and decreases back to (or even below) the breakdown voltage V_{breakdown}. Afterwards, the SPAD is recharged again to make it sensitive for photon arrival.

During damage repair (damage anneal) operation (indicated in Fig. 10D as signal that switches between normal operation during normal operation time Tₒₚ and damage repair operation time Tₐₙₙₑₐₗ), a global recharge signal is provided from the system 97 (which is not part of the detector cell 90), e.g. a central controller, to the OR gate 93. The recharge switch 94 is closed, which pulls the anode of the SPAD to ground so that the SPAD voltage I_{spad} is slowly ramped up and SPAD current I_{spad} is measured. The bias voltage ramp slows down or stops when a certain current limit is reached. This current is maintained for the anneal time (also called heating period). Afterwards, the bias voltage is ramped down to or below breakdown voltage. Finally, the recharge switch 93is opened, and the sensor is reconfigured for normal operation.

In summary, according to the present invention current flow through the SPAD itself is provided, e.g. by suitable configuration of the active quench and recharge circuit and DC current through the device. This solution requires no (or at least no substantial) modification of existing hardware, in particular as long as the recharge switch can be controlled externally. It achieves damage repair of the respective SPAD and thus mitigates potential negative effects of x-ray or gamma irradiation in SPAD-based photon counting detectors, such as higher leakage, higher dark noise and change in spectral sensitivity.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Photon counting detector comprising:
a scintillator (10, 20) configured to convert incident gamma radiation into optical photons;
a pixelated photodetector (11, 22) configured to detect the flux of optical photons wherein the pixelated photodetector (22) is a silicon photomultiplier, SiPM, detector, wherein each photodetector pixel comprises an array of silicon avalanche photo diodes, SPADs; and
circuitry (80, 90) configured to heat SPADs by
- applying, if dark count rate of a SPAD exceeded a dark count rate threshold, an elevated reverse bias voltage to the SPAD to force the SPAD into breakdown with current flowing through the SPAD for the time of a heating period, and
- controlling the length of the heating period.

2. Photon counting detector as claimed in claim 1,
wherein the circuitry (80, 90) is configured to control the length of the heating period based on the amount of dark count rate and/or the extent by which the dark count rate exceeded the dark count rate threshold.

3. Photon counting detector as claimed in claim 2,
wherein the circuitry (80, 90) is configured to control the length of the heating period to be longer the larger the amount of dark count rate is and/or the higher the extent is by which the dark count rate exceeded the dark count rate threshold.

4. Photon counting detector as claimed in claim 2,
wherein the circuitry (80, 90) is configured to control the length of the heating period according to a one or more predetermined lengths.

5. Photon counting detector as claimed in any one of the preceding claims,
further comprising circuitry configured to measure the dark count rate of the SPAD.

6. Photon counting detector as claimed in any one of the preceding claims,
wherein the circuitry (80, 90) is configured to ramp up the reverse bias voltage until a bias current caused by application of the reverse bias voltage to flow reaches a bias current limit.

7. Photon counting detector as claimed in any one of the preceding claims,
wherein the circuitry (80, 90) is configured to ramp down the reverse bias voltage below breakdown voltage after the heating period and to recharge the SPAD to become sensitive for optical photon detection.

8. Photon counting detector as claimed in any one of the preceding claims,
wherein the SPAD insensitive for optical photon detection during the heating period.

9. Photon counting detector as claimed in any one of the preceding claims,
wherein the circuitry (80, 90) is configured to monitor the temperature of the SPAD during the heating period by measuring the reverse bias voltage level.

10. Photon counting detector as claimed in claim 9,
wherein the circuitry (80, 90) is configured to control the reverse bias voltage level during the heating level not to fall below a level required to maintain constant current through the SPAD.

11. Imaging apparatus comprising a photon counting detector as claimed in any one of the preceding claims.

12. Photon counting method of a photon counting detector comprising a scintillator (10, 20) configured to convert incident gamma radiation into optical photons, a pixelated photodetector (11, 22) configured to detect the flux of optical photons wherein the pixelated photodetector (11, 22) is a silicon photomultiplier, SiPM, detector, wherein each photodetector pixel comprises an array of silicon avalanche photo diodes, SPADs, and circuitry (80, 90) configured to heat SPADs, wherein the photon counting method comprising:
- applying, if dark count rate of a SPAD exceeded a dark count rate threshold, an elevated reverse bias voltage to the SPAD to force the SPAD into breakdown with current flowing through the SPAD for the time of a heating period, and
- controlling the length of the heating period.
